(19) Europäisches Patentamt
European Patent Office
Office européen des brevets

(11) **EP 4 187 484 B1**

(12) **EUROPEAN PATENT SPECIFICATION**

(45) Date of publication and mention
of the grant of the patent:
**05.02.2025 Bulletin 2025/06**

(21) Application number: **21851449.5**

(22) Date of filing: **27.07.2021**

(51) International Patent Classification (IPC):
**G06T 5/00** *(2024.01)* **G06T 5/20** *(2006.01)*
**G06T 5/60** *(2024.01)* **G06T 5/70** *(2024.01)*

(52) Cooperative Patent Classification (CPC):
**G06T 5/70; G06T 5/20; G06T 5/60;**
G06T 2207/10068; G06T 2207/20081;
G06T 2207/20084

(86) International application number:
**PCT/CN2021/108608**

(87) International publication number:
**WO 2022/022494 (03.02.2022 Gazette 2022/05)**

(54) **CBD-NET-BASED MEDICAL ENDOSCOPIC IMAGE DENOISING METHOD**

CBD-NET-BASIERTES MEDIZINISCHES ENDOSKOPISCHES
BILDRAUSCHENTFERNUNGSVERFAHREN

PROCÉDÉ DE DÉBRUITAGE D'IMAGE ENDOSCOPIQUE MÉDICALE BASÉ SUR CBD-NET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.07.2020 CN 202010729234**

(43) Date of publication of application:
**31.05.2023 Bulletin 2023/22**

(73) Proprietor: **Nanjing Tuge Healthcare Co., Ltd.
Nanjing, Jiangsu 211100 (CN)**

(72) Inventors:
• **WANG, Yangang
Nanjing, Jiangsu 211100 (CN)**
• **ZHANG, Chengtian
Nanjing, Jiangsu 211100 (CN)**
• **CHEN, Yang
Nanjing, Jiangsu 211100 (CN)**

(74) Representative: **Calysta NV
Lambroekstraat 5a
1831 Diegem (BE)**

(56) References cited:
**CN-A- 110 766 632   CN-A- 111 192 215
CN-A- 111 862 060**

• **GUO SHI ET AL: "Toward Convolutional Blind
Denoising of Real Photographs", 2019 IEEE/CVF
CONFERENCE ON COMPUTER VISION AND
PATTERN RECOGNITION (CVPR), IEEE, 15 June
2019 (2019-06-15), pages 1712 - 1722,
XP033687535, DOI: 10.1109/CVPR.2019.00181**
• **KIM YOONSIK ET AL: "Transfer Learning From
Synthetic to Real-Noise Denoising With Adaptive
Instance Normalization", 2020 IEEE/CVF
CONFERENCE ON COMPUTER VISION AND
PATTERN RECOGNITION (CVPR), IEEE, 13 June
2020 (2020-06-13), pages 3479 - 3489,
XP033805426, DOI: 10.1109/
CVPR42600.2020.00354**
• **SHAOFENG ZOU ET AL: "A CNN-Based Blind
Denoising Method for Endoscopic Images",
ARXIV.ORG, CORNELL UNIVERSITY LIBRARY,
201 OLIN LIBRARY CORNELL UNIVERSITY
ITHACA, NY 14853, 16 March 2020 (2020-03-16),
XP081621920, DOI: 10.1109/
BIOCAS.2019.8918994**

- GUO SHI; YAN ZIFEI; ZHANG KAI; ZUO WANGMENG; ZHANG LEI: "Toward Convolutional Blind Denoising of Real Photographs", 2019 IEEE/CVF CONFERENCE ON COMPUTER VISION AND PATTERN RECOGNITION (CVPR), IEEE, 15 June 2019 (2019-06-15), pages 1712 - 1722, XP033687535, DOI: 10.1109/CVPR.2019.00181

- LIU SHIQI: "Study of Navigation System for Percutaneous Coronary Intervention", CHINA MASTER'S THESES FULL-TEXT DATABASE), no. 8, 30 August 2019 (2019-08-30), XP055890916

**Description**

## TECHNICAL FIELD

The present disclosure relates to the technical field of medical endoscopic image processing, and in particular, to a method for denoising a medical endoscopic image based on a CBD-Net.

## BACKGROUND

A medical electronic endoscope is a product implemented by the continuous development and integration of a conventional endoscope and computer, microelectronics and other technologies, and is currently a very widely used medical instrument. The endoscope can be used to perform effective in-vivo examination, photograph an image of a diseased region, and extract the diseased region as a sample, to provide more information for the treatment in a next step. However, in practical application, medical images are often affected by an imaging device and an external environment during collection, conversion and transmission, and there are inevitably some noise in endoscopic images. The noise may seriously reduce image quality, damage detailed information in the images, interfere with a doctor' correct judgment, or even cause misdiagnosis. Therefore, how to improve an endoscopic denoising technology so as to remove noise in an image well and retain effective information of the image to the greatest extent is of great value in practical applications.

Endoscopes usually adopt a complementary metal oxide semiconductor (CMOS) image sensor, with main noise sources being noise generated when a photodiode, a field-effect transistor and an image sensor of a pixel photosensitive unit operate. Noise produced by the photodiode includes thermal noise, shot noise, coincidence noise, and current noise. A metal oxide semiconductor (MOS) field-effect transistor includes a field-effect transistor in an amplifier and a field-effect transistor used for a row-column address selection analog switch, which mainly causes a thermal noise, an induced gate noise, and a current noise. Other noise, such as reset noise (kTC noise) and spatial noise, is further introduced into a CMOS image sensor composed of a photosensitive array and an MOS field-effect transistor.

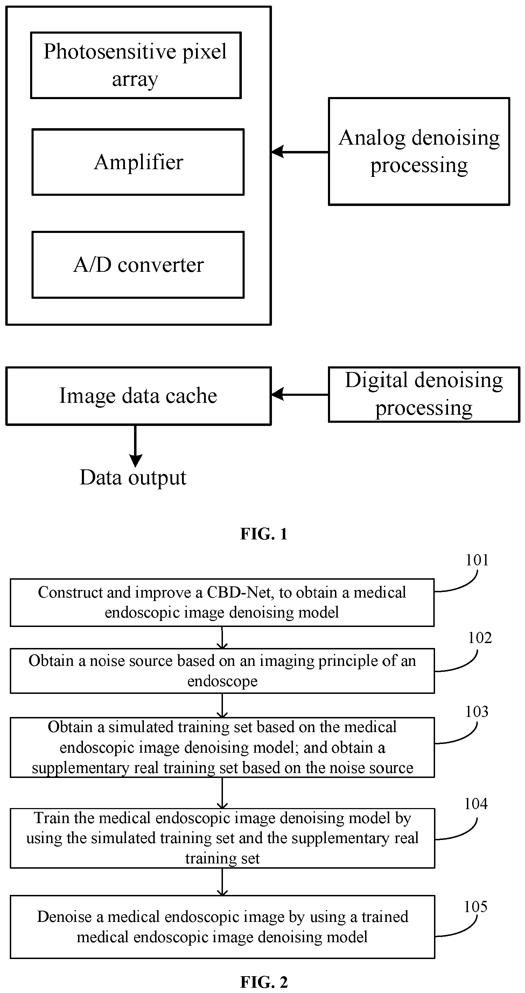

Referring to FIG. 1, some noise may be processed by an analog denoising method such as by using a correlated double sampling circuit, and a digital denoising processing part is mainly considered in the present disclosure.

Image denoising is faced with distinguishing and selection between details and noise. Because the goal of denoising is for medical images, it is necessary to investigate noise characteristics in detail in order to be rigorous during denoising and make denoised images truly clinically usable.

Currently, a bilateral filtering method is used to denoise an endoscope image. Bilateral filtering is implemented by a nonlinear filter, which can achieve effects of edge preserving and smooth denoising. Bilateral filtering is implemented by using a weighted average method, in which an intensity of a pixel is represented with a weighted average of brightness values of surrounding pixels, and the weighted average used is based on Gaussian distribution.

The bilateral filtering features that the weight not only takes a Euclidean distance between pixels (for example, ordinary Gaussian low-pass filtering only takes the impact of a position on a central pixel) into account, but also takes a radiation difference in a pixel range domain (such as a similarity between a pixel and a central pixel in a convolution kernel, a color intensity, and a depth distance) into account. During calculation of the central pixel, the above two contents are considered at the same time:

In a flat region of an image, the pixel value changes little, and a corresponding pixel range domain weight is close to 1. In this case, a spatial domain weight plays a major role, which is equivalent to Gaussian blur. In an edge region of the image, the pixel value changes greatly, and the weight of the pixel range domain becomes larger, thereby preserving edge information.

Although bilateral filtering performs well in preserving the edge part, the bilateral filtering cannot identify noise characteristics, and cannot well distinguish high-frequency noise from high-frequency details. When input noise parameters are too large, the details may be easily erased, otherwise the denoising effect is not obvious. In addition, bilateral filtering needs gray information of each central point domain to determine a parameter of the bilateral filtering, so that the bilateral filtering velocity is relatively low, and a growth rate of a calculated amount is the square of a kernel size.

Known denoising methods are disclosed in Guo, Shi, et al. "Toward convolutional blind denoising of real photographs." Proceedings of the IEEE/CVF conference on computer vision and pattern recognition. 2019 and Kim, Yoonsik, et al. "Transfer learning from synthetic to real-noise denoising with adaptive instance normalization. " Proceedings of the IEEE/CVF conference on computer vision and pattern recognition. 2020.

## SUMMARY

Based on this, an objective of the present disclosure is to provide a method for denoising a medical endoscopic image based on a CBD-Net, which denoises an endoscopic image on the basis of preserving details. The invention is set out in de appended claims.

Roughly speaking, to achieve the above objective, the present disclosure provides a method for denoising a medical endoscopic image based on a CBD-Net, including:

constructing and improving a CBD-Net, to obtain a medical endoscopic image denoising model;
obtaining a noise source based on an imaging principle of an endoscope;
obtaining a simulated training set based on the medical endoscopic image denoising model; and obtaining a supplementary real training set based on the noise source;
training the medical endoscopic image denoising model by using the simulated training set and the supplementary real training set; and
denoising a medical endoscopic image by using a trained medical endoscopic image denoising model.

Further, the CBD-Net includes a noise estimation subnetwork and a non-blind denoising subnetwork;

the noise estimation subnetwork is composed of five fully connected layers, each convolution layer has 32 channels, with a filter size of 3*3, and each convolution layer is followed by an Relu activation function; and
the non-blind denoising subnetwork has a U-Net structure, with a filter size of 3*3, an activation function is set behind each convolution layer other than the last layer, and the activation function is Relu.

Further, in the improved CBD-Net, an initial noise model n(x)-N(0, $\sigma$(y)) is as follows:

$$\sigma^2(x) = x \cdot \sigma_s^{\bar{2}} + \sigma_c^2 \ ,$$

and

$$n(x) = n_s(x) + n_c,$$

where in n(x) = $n_s$(x) + $n_c$, $n_s$ represents a signal-dependent noise part, which is often related to image brightness. $n_c$ represents a stationary noise part, and is modeled as white Gaussian noise with a variance of $\sigma_s^2$, $\sigma_c^2$ ; and considering an image signal processing (ISP) process and a joint photographic experts group (JPEG) compression effect in a camera, the medical endoscopic image denoising model is obtained as follows:

$$y = JPEG(M^{-1}(M(f(L + n(x))))) $$

where y represents a to-be-input noise image; f($\cdot$) represents a camera response function (CRF), which is used to restore an irradiance L generated by photographing in reality to convert the image into an original clean image x; and $M$($\cdot$) represents a function that converts an sRGB image into a Bayer image.

Further, in the improved CBD-Net, a loss function is as follows:

$$\mathcal{L} = \mathcal{L}_{\text{rec}} + \lambda_{\text{asymm}}\mathcal{L}_{\text{asymm}} + \lambda_{\text{TV}}\mathcal{L}_{\text{TV}}$$

$$\mathcal{L}_{asymm} = \sum_i \left| \alpha - \mathbb{I}_{(\hat{\sigma}(y_i) - \sigma(y_i)) < 0} \right| \cdot (\hat{\sigma}(y_i) - \sigma(y_i))^2$$

is an asymmetric learning loss in the noise estimation subnetwork, where when e<0, le=1, otherwise, le is 0; $\hat{\sigma}$($y_i$) is an estimated noise level of the noise estimation subnetwork, and $\sigma$($y_i$) is a real noise $_{level}$;

$$\mathcal{L}_{TV} = \|\nabla_h \hat{\sigma}(y)\|_2^2 + \|\nabla_v \hat{\sigma}(y)\|_2^2$$

is a smoothness constraint of $\hat{\sigma}$($y_i$), and $\nabla_h$ $\nabla_v$ represent gradients in a vertical direction and a horizontal direction respectively; and

$$\mathcal{L}_{rec} = \| \hat{x} - x \|_2^2$$

is an image reconstruction error, and $\hat{x}$ is a denoising network input.

Further, an imaging element of the endoscope is a CMOS photosensitive element, and the noise source is implemented in the following way: when the endoscope is in a human body, a light source only comes from supplementary light from the endoscope, which results in a dark environment, and when an aperture is unchanged, noise is increased by an excessive exposure gain.

Further, the obtaining a supplementary real training set based on the noise source includes:

simulating and adapting to a plurality of different detail features in the human body by using photographed objects with different details;

fixing a lens, photographing a video in an environment with adequate illumination, and changing an exposure gain of the video; and

capturing images with noise and images without noise under the same brightness as positive and negative samples in the supplementary real training set.

Further, the photographed objects include lean animal meat, fat animal meat, and animal viscera.

According to the specific embodiments of the present disclosure, the present disclosure discloses the following technical effects:

1. A more realistic noise model is provided, which takes the impact of signal-dependent noise and an ISP process on noise into account, and shows that the image noise model plays a key role in a real noise image. To some extent, it can be understood that a degradation model closer to a real scenario is used.

2. A CBD-Net model is provided, and includes a noise estimation subnetwork (noise level map) and a non-blind denoising subnetwork, which can implement the process of blind denoising of an image (i.e., unknown noise level), that is, blind denoising of an image via the noise estimation subnetwork and the non-blind denoising subnetwork.

3. A loss function of asymmetric learning is provided, and a user is allowed to adjust denoising results interactively, which enhances the robustness of the denoising results.

4. A synthetic noise image and a real noise image are used in the training of a network to improve a denoising effect and generalization ability of the network.

5. According to the present disclosure, factors such as an original color tone and brightness of an endoscope image are not changed when the endoscope image is processed, and details of the medical image are well preserved.

## BRIEF DESCRIPTION OF THE DRAWINGS

To describe the technical solutions in embodiments of the present disclosure or in prior art more clearly, the accompanying drawings required in the embodiments are briefly described below. Obviously, the accompanying drawings in the following description describe only some embodiments of the present disclosure. A person of ordinary skill in the art may further obtain other accompanying drawings based on these accompanying drawings without creative efforts.

FIG. 1 is a schematic diagram of a common method for denoising a medical endoscopic image;
FIG. 2 is a flowchart of a method for denoising a medical endoscopic image based on a CBD-Net;
FIG. 3 is a schematic diagram of a denoising process of the present disclosure;
FIG. 4 is a diagram of comparison before and after denoising according to the present disclosure; and
FIG. 5 is a result of denoising comparison between the present disclosure and block matching and 3D collaborative filtering (BM3D) and between the present disclosure and a fast and flexible denoising convolutional neural network (FFDNet).

## DETAILED DESCRIPTION OF THE EMBODIMENTS

The technical solutions of the embodiments of the present disclosure are clearly and completely described below with reference to the accompanying drawings in the embodiments of the present disclosure while the scope of the invention is set out by the appended claims.

To make the above objectives, features, and advantages of the present disclosure clearer and more comprehensible, the present disclosure will be further described in detail below with reference to the accompanying drawings and the specific implementations.

Based on existing endoscopic image data, different algorithms are used to try to denoise for analyzing noise characteristics. Through observation of an existing endoscopic image, it can be learned that in practical application, the endoscopic image has low ambient brightness, and the noise is obvious, and is mainly Gaussian noise, so conventional methods such as Gaussian filtering, BM3D and bilateral filtering, which have good performance in Gaussian denoising, are used to make preliminary denoising attempts. Typical denoising convolutional neural network (DnCNN), DnCNN-B, FFDNet and CBD-Net models are used for denoising.

The conventional and neural network methods with good performance are selected for improvement and comparison: a conventional algorithm with good performance is the BM3D, and denoising networks with good performance are the FFDNet and the CBD-Net.

Based on the noise characteristics, the CBD-Net is selected and improved by a formula weight and training set expansion to meet denoising requirements: the CBD-Net performs well on some endoscopic negative samples, so this network is selected as the basis for improvement.

As shown in FIG 2, a method for denoising a medical endoscopic image based on a CBD-Net according to the present disclosure includes the following steps.

Step 101: Construct and improve a CBD-Net, to obtain a medical endoscopic image denoising model.

Step 102: Obtain a noise source based on an imaging principle of an endoscope.

Step 103: Obtain a simulated training set based on noise modeling; and obtain a supplementary real training set based on the noise source.

Step 104: Train the medical endoscopic image denoising model by using the simulated training set and the supplementary real training set.

Step 105: Denoise a medical endoscopic image by using a trained medical endoscopic image denoising model.

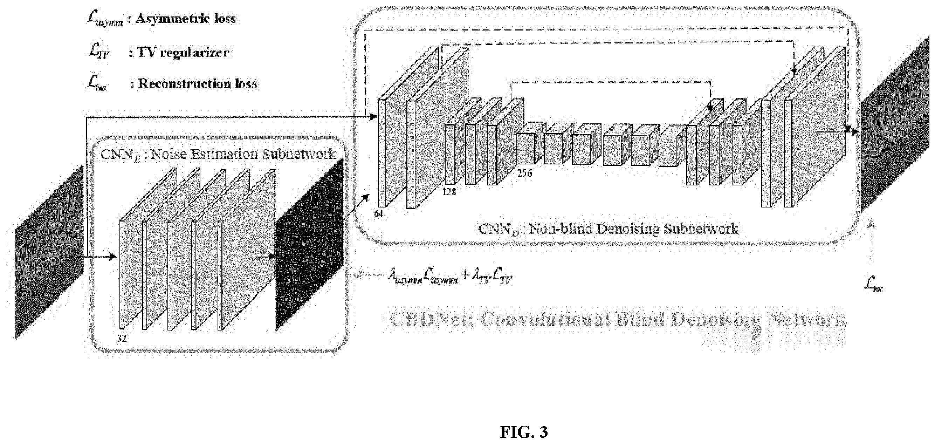

Referring to FIG. 3, in an embodiment, in step 101, the CBD-Net includes a noise estimation subnetwork and a non-blind denoising subnetwork;

the noise estimation subnetwork is composed of five fully connected layers, there is no pooling layer and no Batch Normalization, each convolution layer has 32 channels, with a filter size of 3*3, and each convolution layer is followed by an Relu activation function; and

the non-blind denoising subnetwork has a U-Net structure, with a filter size of 3*3, an activation function is set behind each convolution layer other than the last layer, and the activation function is Relu.

On this basis, according to the present disclosure, improvements have been made in two aspects.

In this embodiment, in the CBD-Net improved in step 101, an initial noise model n(x)-N(0, σ(y)) of the CBD-Net is as follows:

$$\sigma^2(x) = x \cdot \sigma_s^2 + \sigma_c^2 \text{ , and } \ n(x) = n_s(x) + n_c,$$

where in n(x) = $n_s(x) + n_c$ herein, $n_s$ represents a signal-dependent noise part, which is often related to image brightness. $n_c$ represents a stationary noise part, and is often modeled as white Gaussian noise with a variance of $\sigma_s^2, \ \sigma_c^2$ .

In addition, according to the present disclosure, a complex ISP process in the camera is considered, which produces a noise model that is expressed by the following formula and depends on both a signal and a color channel:

$$y = M^{-1}(M(f(L + n(x))))$$

where y represents a to-be-input noise image; f(·) represents a camera response function (CRF), which is used to restore an irradiance L generated by photographing in reality to convert the image into an original clean image x; $M(\cdot)$ represents a function that converts an sRGB image into a Bayer image, the Bayer format described herein may be unfamiliar to many people, but is actually the format of the most original picture, generally having a suffix of .raw; and $M^{-1}(\cdot)$ represents a demosaicing function.

After this, further, considering that the image may undergo some compression more or less during transmission, the JPEG compression effect is also taken into account during noise modeling, and the formula is expressed as:

$$y = JPEG(M^{-1}(M(f(L + n(x)))))$$

Because most endoscopic images do not need high-level compression in the original text, the adding of the compression may affect the effect, so this method excludes the image compression effect from the noise model.

In this embodiment, in the CBD-Net improved in step 101, the loss function comes from: $\mathcal{L} = \mathcal{LLL}$. The asymmetric loss function designed herein is used in noise estimation to eliminate asymmetric sensitivity of a mainstream non-blind denoising method which is sensitive to underestimated errors and robust to overestimated errors. Given an estimated noise level $\hat{\sigma}(y_i)$ and a true value $\sigma(y_i)$ of a pixel i, when $\sigma(y_i) < \sigma(y_i)$, more penalties should be introduced to a mean square error of the pixel i, which may be expressed as the following formula:

$$\mathcal{L}_{\mathrm{asymm}} = \sum_i |\alpha - \mathrm{I}_{(\hat{\sigma}(\mathrm{yi})-\sigma(\mathrm{yi}))} < 0| \cdot (\hat{\sigma}(y_i) - \sigma(y_i))^2$$

where when e<0, $\mathrm{I}_e = 1$, otherwise is 0; and by setting $0 < \alpha < 0.5$, more penalties may be introduced to underestimated errors.

In addition, a total variation regularization term (TV) is introduced for the smoothness of the constraint $\hat{\sigma}(y_i)$:

$$\mathcal{L}_{TV} = \parallel \nabla_h \sigma(y_i) \parallel_2^2 + \parallel \nabla_v \sigma(y) \parallel_2^2$$

where $\nabla_h \nabla_v$ represent gradients in a vertical direction and a horizontal direction respectively.

For $\hat{x}$ of the denoising network input, the reconstruction error is defined:

$$\mathcal{L}_{rec} = \parallel \hat{x} - x \parallel_2^2$$

In conclusion, an ultimate target loss function of the CBD-Net is:

$$\mathcal{L} = \mathcal{L}_{\mathrm{rec}} + \lambda_{\mathrm{asymm}} \mathcal{L}_{\mathrm{asymm}} + \lambda_{\mathrm{TV}} \mathcal{L}_{\mathrm{TV}}$$

Referring to non-blind denoising methods such as the BM3D and the FFDNet, an asymmetric learning method is adopted for Lasymm constructed by the method of the present disclosure, and a relatively large weight is given to encourage noise overestimation to achieve a good denoising effect. However, for a medical endoscopic image, overestimation may lead to the loss of details of the medical image, which may lead to misdiagnosis in a severe case, and the loss of details such as visceral texture is not desired. Therefore, the weight of asymmetric learning is reduced in the method of the present disclosure.

Considering parameters of asymmetric learning, in a medical image, a user prefers to preserve some noise rather than excessively smooth details of the image, so this method intends to lower the degree of asymmetric learning and change the original assignment $\alpha = 0.3$ to $\alpha = 0.45$ in the formula of asymmetric learning. Weights in the loss function are set to $\lambda_{\mathrm{asymm}}=0.3$, and $\lambda_{\mathrm{TV}} = 0.05$ respectively.

In this embodiment, in step 102, an imaging element of the endoscope is a CMOS photosensitive element, and the noise source is implemented in the following way: when the endoscope is in a human body, a light source only comes from supplementary light from the endoscope, which results in a dark environment, and when an aperture is unchanged, noise is increased by an excessive exposure gain.

In this embodiment, in step 103, the obtaining a supplementary real training set based on the noise source includes the following steps.

Step (3.1): Simulate and adapt to a plurality of different detail features in the human body by using photographed objects with different details.

Step (3.2): Fix a lens, photograph a video in an environment with adequate illumination, and change an exposure gain of the video.

Step (3.3): Capture images with noise and images without noise under the same brightness as positive and negative samples in the supplementary real training set.

In this embodiment, in step (3.1), the photographed objects include lean animal meat, fat animal meat, and animal viscera.

In this embodiment, the simulated training set in step 103 is 1600 images of a public data set Waterloo, 400 images of BSD500, and 1600 images of an MIT-Adobe FiveK database, which are modeled and added as positive and negative training data based on the explained noise model; and the real training set is the supplementary real training set described above, which is obtained after the test with the company endoscope.

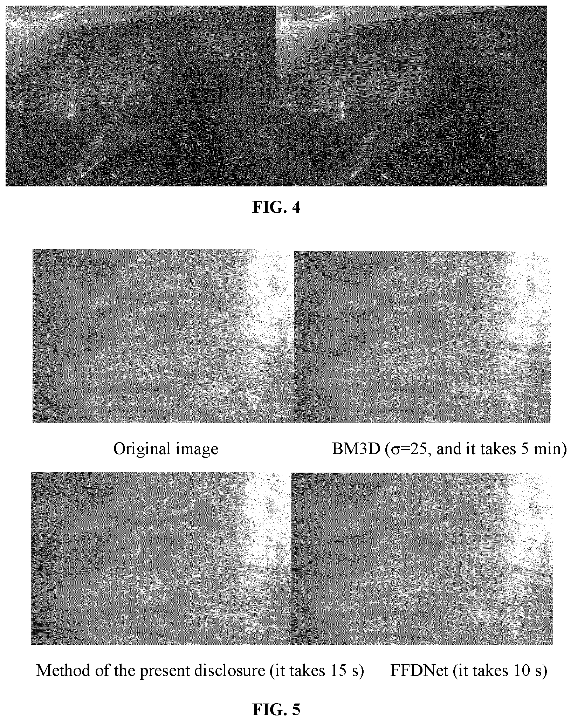

In order to verify the effect of the present disclosure, the real noisy endoscope image is used to verify the improvement of the method of the present disclosure compared with conventional methods and other deep learning methods. Referring to FIG. 4 and FIG. 5, the method of the present disclosure has little difference in denoising improvement effect from a conventional BM3D algorithm, but has obvious advantages compared with the FFDNet with good performance. Because the method of the present disclosure does not need to input a noise coefficient, and is a blind denoising method, the method is superior to a conventional algorithm in time and complexity and is of great significance to a clinical endoscopic surgery.

Each embodiment of the description is described in a progressive manner, each embodiment focuses on the difference from other embodiments, and for the same and similar parts between the embodiments, reference may be made to each other.

Specific examples are used herein to explain the principles and implementations of the present disclosure. The foregoing description of the embodiments is merely intended to help understand the method of the present disclosure and the scope of the invention is set out by the appended claims.

**Claims**

1. A computer-implemented method for denoising a medical endoscopic image based on a convolutional blind denoising network (CBD-Net), comprising:

   constructing a CBD-Net, to obtain a medical endoscopic image denoising model;
   obtaining a noise source based on an imaging principle of an endoscope;
   wherein an imaging element of the endoscope is a complementary metal oxide semiconductor (CMOS) photosensitive element, and the noise source is implemented in the following way: when the endoscope is in a human body, a light source only comes from supplementary light from the endoscope, which results in a dark environment, and when an aperture is unchanged, noise is increased by an excessive exposure gain;
   obtaining (103) a simulated training set based on the medical endoscopic image denoising model;
   obtaining (103) a supplementary real training set based on the noise source; wherein the obtaining (103) a simulated training set based on the medical endoscopic image denoising model and the obtaining (103) a supplementary real training set based on the noise source comprise steps 3.1) to 3.3) as follows:

      3.1) simulating and adapting to a plurality of different detail features in the human body by using photographed objects with different details;
      3.2) fixing a lens, photographing a video in an environment with adequate illumination, and changing an exposure gain of the video; and
      3.3) capturing images with noise and images without noise under the same brightness as positive and negative samples in the supplementary real training set;

   training the medical endoscopic image denoising model by using the simulated training set and the supplementary real training set; and
   denoising a medical endoscopic image by using a trained medical endoscopic image denoising model.

2. The method for denoising a medical endoscopic image based on a CBD-Net according to claim 1, wherein the CBD-Net comprises a noise estimation subnetwork and a non-blind denoising subnetwork;

   the noise estimation subnetwork is composed of five fully connected layers, each convolution layer has 32 channels, with a filter size of 3*3, and each convolution layer is followed by an Relu activation function; and
   the non-blind denoising subnetwork has a U-Net structure, with a filter size of 3 *3, an activation function is set behind each convolution layer other than the last layer, and the activation function is Relu.

3. The method for denoising a medical endoscopic image based on a CBD-Net according to claim 2, wherein in the CBD-Net, an initial noise model n(x)-N(0, σ(y)) is as follows:

$$\sigma^2(x) = x \cdot \sigma_s^2 + \sigma_c^2 \text{ , and } n(x) = n_s(x) + n_c,$$

in n(x) = $n_s$(x) + $n_c$, $n_s$ represents a signal-dependent noise part, and $n_c$ represents a stationary noise part, and is modeled as white Gaussian noise with a variance of $\sigma_s^2$, $\sigma_c^2$; and

considering an image signal processing (ISP) process and a joint photographic experts group (JPEG) compression effect in a camera, the medical endoscopic image denoising model is obtained as follows:

$$y = JPEG(M^{-1}(M(f(L + n(x)))))$$

wherein y represents a to-be-input noise image; f(·) represents a camera response function (CRF), which is used to restore an irradiance L generated by photographing in reality to convert the image into an original clean image x; and $M$(·) represents a function that converts an sRGB image into a Bayer image.

4. The method for denoising a medical endoscopic image based on a CBD-Net according to claim 2, wherein in the CBD-Net, a loss function is as follows:

$$\mathcal{L} = \mathcal{L}_{\mathrm{rec}} + \lambda_{\mathrm{asymm}}\mathcal{L}_{\mathrm{asymm}} + \lambda_{\mathrm{TV}}\mathcal{L}_{\mathrm{TV}}$$

$$\mathcal{L}_{asymm} = \sum_i |\alpha - \mathbb{I}_{(\hat{\sigma}(y_i)-\sigma(y_i))<0}| \cdot (\hat{\sigma}(y_i) - \sigma(y_i))^2$$

is an asymmetric learning loss in the noise estimation subnetwork, wherein when e<0, Ie=1, otherwise, Ie is 0; $\hat{\sigma}(y_i)$ is an estimated noise level of the noise estimation subnetwork, and $\sigma(y_i)$ is a real noise level;

$$\mathcal{L}_{TV} = \|\nabla_h\hat{\sigma}(y)\|_2^2 + \|\nabla_v\hat{\sigma}(y)\|_2^2$$

is a smoothness constraint of $\hat{\sigma}(y_i)$, and $\nabla_h\nabla_v$ represent gradients in a vertical direction and a horizontal direction respectively; and

$$\mathcal{L}_{rec} = \|\hat{x} - x\|_2^2$$

is an image reconstruction error, and $\hat{x}$ is a denoising network input.

5. The method for denoising a medical endoscopic image based on a CBD-Net according to claim 1, wherein the photographed objects comprise lean animal meat, fat animal meat, and animal viscera.

**Patentansprüche**

1. Computerimplementiertes Verfahren zum Entrauschen eines medizinischen endoskopischen Bildes auf Grundlage eines Faltungsblindentrauschungsnetzwerkes (CBD-Netz), umfassend:

Aufbauen eines CBD-Netzes, um ein medizinisches endoskopisches Bildentrauschungsmodell zu erhalten;
Erhalten einer Rauschquelle auf Grundlage eines Abbildungsprinzips eines Endoskops;
wobei ein Abbildungselement des Endoskops ein lichtempfindliches Element eines Komplementär-Metalloxidhalbleiters (CMOS) ist und die Rauschquelle auf die folgende Weise implementiert wird: wenn sich das Endoskop in einem menschlichen Körper befindet, stammt eine Lichtquelle nur von zusätzlichem Licht aus dem Endoskop, was zu einer dunklen Umgebung führt, und wenn eine Blende unverändert ist, wird das Rauschen durch eine übermäßige Belichtungsverstärkung erhöht;
Erhalten (103) eines simulierten Trainingssatzes auf Grundlage des medizinischen endoskopischen Bildentrauschungsmodells;
Erhalten (103) eines zusätzlichen realen Trainingssatzes auf Grundlage der Rauschquelle; wobei das Erhalten (103) eines simulierten Trainingssatzes auf Grundlage des medizinischen endoskopischen Bildentrauschungsmodells und das Erhalten (103) eines zusätzlichen realen Trainingssatzes auf Grundlage der Rauschquelle die Schritte 3.1) bis 3.3) wie folgt umfassen:

3.1) Simulieren und Anpassen an eine Mehrzahl unterschiedlicher Detailmerkmale in dem menschlichen Körper durch Verwenden von fotografierten Objekten mit unterschiedlichen Details;
3.2) Fixieren eines Objektivs, Aufnehmen eines Videos in einer Umgebung mit angemessener Beleuchtung und Ändern der Belichtungsstärke des Videos; und
3.3) Aufnehmen der Bilder mit Rauschen und der Bilder ohne Rauschen bei gleicher Helligkeit als positive und negative Proben in dem zusätzlichen realen Trainingssatz;

Trainieren des medizinischen endoskopischen Bildentrauschungsmodells unter Verwendung des simulierten Trainingssatzes und des zusätzlichen realen Trainingssatzes; und
Entrauschen eines medizinischen endoskopischen Bildes unter Verwendung eines trainierten medizinischen endoskopischen Bildentrauschungsmodells.

2. Verfahren zum Entrauschen eines medizinischen endoskopischen Bildes auf Grundlage eines CBD-Netzes nach Anspruch 1, wobei das CBD-Netz ein Rauschschätzungsteilnetzwerk und ein nicht blindes Entrauschungsteilnetzwerk umfasst;

das Rauschschätzungsteilnetzwerk aus fünf vollständig verbundenen Schichten besteht, jede Faltungsschicht 32 Kanäle mit einer Filtergröße von 3*3 aufweist, und auf jede Faltungsschicht eine Relu-Aktivierungsfunktion folgt; und
das nicht blinde Entrauschungsteilnetzwerk eine U-Netz-Struktur mit einer Filtergröße von 3*3 aufweist, eine Aktivierungsfunktion hinter jede Faltungsschicht außer der letzten Schicht eingestellt wird, und die Aktivierungsfunktion Relu ist.

3. Verfahren zum Entrauschen eines medizinischen endoskopischen Bildes auf Grundlage eines CBD-Netzes nach Anspruch 2, wobei in dem CBD-Netz ein anfängliches Rauschmodell n(x)-N(0, σ(y)) wie folgt ist:

$$\sigma^2(x) = x \cdot \sigma_s^2 + \sigma_c^2, \text{ und } n(x) = n_s(x) + n_c,$$

wobei in $n(x) = n_s(x) + n_c$, $n_s$ einen signalabhängigen Rauschanteil darstellt und $n_c$ einen stationären Rauschanteil darstellt und als weißes Gaußsches Rauschen mit einer Varianz von $\sigma_s^2$, $\sigma_c^2$ modelliert wird; und
unter Berücksichtigung eines Bildsignalverarbeitungsprozesses (ISP-Prozesses) und eines Kompressionseffekts der Joint Photographic Experts Group (JPEG) in einer Kamera das medizinische endoskopische Bildentrauschungsmodell wie folgt erhalten wird:

$$y = JPEG(M^{-1}(M(f(L + n(x)))))$$

wobei y ein einzugebendes Rauschbild darstellt; f(·) eine Kamerareaktionsfunktion (CRF) darstellt, die verwendet wird, um eine durch Fotografieren in der Realität erzeugte Bestrahlungsstärke L wiederherzustellen, um das Bild in ein ursprüngliches sauberes Bild x umzuwandeln; und M(·) eine Funktion darstellt, die ein sRGB-Bild in ein Bayer-Bild umwandelt.

4. Verfahren zum Entrauschen eines medizinischen endoskopischen Bildes auf Grundlage eines CBD-Netzes nach Anspruch 2, wobei in dem CBD-Netz eine Verlustfunktion wie folgt ist:

$$\mathcal{L} = \mathcal{L}_{\text{rec}} + \lambda_{\text{asymm}} \mathcal{L}_{\text{asymm}} + \lambda_{\text{TV}} \mathcal{L}_{\text{TV}}$$

$$\mathcal{L}_{asymm} = \sum_i |\alpha - \mathbb{I}_{(\tilde{\sigma}(y_i) - \sigma(y_i)) < 0}| \cdot (\tilde{\sigma}(y_i) - \sigma(y_i))^2$$

wobei ein asymmetrischer Lernverlust in dem Rauschschätzungsteilnetz ist, wobei, wenn e < 0 ist, Ie = 1 ist, andernfalls Ie 0 ist ; $\hat{\sigma}(y_i)$ ein geschätzter Rauschpegel des Rauschschätzungsteilnetzwerkes ist, und $\sigma(y_i)$ ein tatsächlicher Rauschpegel ist;

$$\mathcal{L}_{TV} = \|\nabla_h \hat{\sigma}(y)\|_2^2 + \|\nabla_v \hat{\sigma}(y)\|_2^2$$

eine Glättungsbedingung von $\hat{\sigma}(y_i)$ ist, und $\nabla_h \nabla_v$ Gradienten in einer vertikalen beziehungsweise horizontalen Richtung darstellt; und

$$\mathcal{L}_{rec} = \|\hat{x} - x\|_2^2$$

ein Bildrekonstruktionsfehler ist, und $\hat{x}$ ein Rauschunterdrückungsnetzwerkeingang ist.

5. Verfahren zum Entrauschen eines medizinischen endoskopischen Bildes auf Grundlage eines CBD-Netzes nach Anspruch 1, wobei die fotografierten Objekte mageres Tierfleisch, fettes Tierfleisch und tierische Eingeweide umfassen.

## Revendications

1. Procédé mis en oeuvre par ordinateur pour le débruitage d'une image endoscopique médicale sur la base d'un réseau de débruitage aveugle convolutionnel (réseau CBD-Net), comprenant :

la construction d'un réseau CBD-Net, pour obtenir un modèle de débruitage d'image endoscopique médicale ;
l'obtention d'une source de bruit sur la base d'un principe d'imagerie d'un endoscope ;
dans lequel un élément d'imagerie de l'endoscope est un élément photosensible à semi-conducteur métal-oxyde complémentaire (CMOS), et la source de bruit est mise en oeuvre de la manière suivante : lorsque l'endoscope se trouve dans un corps humain, une source de lumière ne provient que de la lumière supplémentaire de l'endoscope, ce qui entraîne un environnement sombre, et lorsqu'une ouverture est inchangée, le bruit est augmenté par un gain d'exposition excessif ;
l'obtention (103) d'un ensemble d'entraînement simulé sur la base du modèle de débruitage d'image endoscopique médicale ;
l'obtention (103) d'un ensemble d'entraînement réel supplémentaire sur la base de la source de bruit ; dans lequel l'obtention (103) d'un ensemble d'entraînement simulé sur la base du modèle de débruitage d'image endoscopique médicale et l'obtention (103) d'un ensemble d'entraînement réel supplémentaire sur la base de la source de bruit comprennent les étapes 3.1) à 3.3) comme suit :

3.1) la simulation et l'adaptation à une pluralité de caractéristiques détaillées différentes dans le corps humain en utilisant des objets photographiés avec des détails différents ;
3.2) la fixation d'un objectif, la photographie d'une vidéo dans un environnement doté d'un éclairage adéquat, et la modification d'un gain d'exposition de la vidéo ; et
3.3) la capture d'images avec bruit et d'images sans bruit sous la même luminosité que des échantillons positifs et négatifs dans l'ensemble d'entraînement réel supplémentaire ;

l'entraînement du modèle de débruitage d'image endoscopique médicale en utilisant l'ensemble d'entraînement simulé et l'ensemble d'entraînement réel supplémentaire ; et
le débruitage d'une image endoscopique médicale en utilisant un modèle de débruitage d'image endoscopique médicale entraîné.

2. Procédé de débruitage d'une image endoscopique médicale sur la base d'un réseau CBD-Net selon la revendication 1, dans lequel le réseau CBD-Net comprend un sous-réseau d'estimation du bruit et un sous-réseau de débruitage non aveugle ;

le sous-réseau d'estimation du bruit est composé de cinq couches entièrement connectées, chaque couche de convolution ayant 32 canaux, avec une taille de filtre de 3*3, et chaque couche de convolution est suivie d'une fonction d'activation Relu ; et
le sous-réseau de débruitage non aveugle a une structure en réseau U-Net, avec une taille de filtre de 3*3, une fonction d'activation est placée derrière chaque couche de convolution autre que la dernière couche, et la fonction d'activation est la fonction Relu.

3. Procédé de débruitage d'une image endoscopique médicale sur la base d'un réseau CBD-Net selon la revendication 2, dans lequel dans le réseau CBD-Net, un modèle de bruit initial n(x) - N(0, σ(y)) est comme suit :

$$\sigma^2(x) = x \cdot \sigma_s^2 + \sigma_c^2 \text{, et } n(x) = n_s(x) + n_c,$$

dans n(x) = $n_s(x)$ + $n_c$, $n_s$ représente une partie de bruit dépendant du signal, et $n_c$ représente une partie de bruit stationnaire, et est modélisé comme un bruit gaussien blanc avec une variance de $\sigma_s^2$, $\sigma_c^2$ ; et

en considérant un procédé de traitement du signal d'image (ISP) et un effet de compression du groupe mixte d'experts en photographie (JPEG) dans une caméra, le modèle de débruitage d'image endoscopique médicale est obtenu comme suit :

$$y = JPEG(M^{-1}(M(f(L + n(x)))))$$

dans lequel y représente une image de bruit à entrer ; f($\cdot$) représente une fonction de réponse de caméra (CRF), qui est utilisée pour restaurer un rayonnement L généré par photographie dans la réalité pour convertir l'image en une image nette d'origine x ; et $M(\cdot)$ représente une fonction qui convertit une image sRGB en une image Bayer.

4. Procédé de débruitage d'une image endoscopique médicale sur la base d'un réseau CBD-Net selon la revendication 2, dans lequel, dans le réseau CBD-Net, une fonction de perte est comme suit :

$$\mathcal{L} = \mathcal{L}_{rec} + \lambda_{asymm}\mathcal{L}_{asymm} + \lambda_{TV}\mathcal{L}_{TV}$$

$$\mathcal{L}_{asymm} = \sum_i |\alpha - \mathbb{I}_{(\hat{\sigma}(y_i) - \sigma(y_i)) < 0}| \cdot (\hat{\sigma}(y_i) - \sigma(y_i))^2$$

est une perte d'apprentissage asymétrique dans le sous-réseau d'estimation du bruit, dans lequel lorsque e < 0, le = 1, sinon, le est égal à 0 ; $\hat{\sigma}(y_i)$ est un niveau de bruit estimé du sous-réseau d'estimation du bruit, et $\sigma(y_i)$ est un niveau de bruit réel ;

$$\mathcal{L}_{TV} = \|\nabla_h \hat{\sigma}(y)\|_2^2 + \|\nabla_v \hat{\sigma}(y)\|_2^2$$

est une contrainte de lissage de $\hat{\sigma}(y_i)$, et $\nabla_h \nabla_v$ représentent des gradients dans une direction verticale et une direction horizontale respectivement ; et

$$\mathcal{L}_{rec} = \|\hat{x} - x\|_2^2$$

est une erreur de reconstruction d'image et $\hat{x}$ est une entrée de réseau de débruitage.

5. Procédé de débruitage d'une image endoscopique médicale sur la base d'un réseau CBD-Net selon la revendication 1, dans lequel les objets photographiés comprennent de la viande animale maigre, de la viande animale grasse et des viscères animaux.

```
┌─────────────────────────────────────┐
│  ┌───────────────────────────────┐  │
│  │   Photosensitive pixel        │  │
│  │        array                  │  │
│  └───────────────────────────────┘  │
│                                      │        ┌──────────────────────┐
│  ┌───────────────────────────────┐  │◄────── │   Analog denoising    │
│  │        Amplifier              │  │        │     processing        │
│  └───────────────────────────────┘  │        └──────────────────────┘
│                                      │
│  ┌───────────────────────────────┐  │
│  │      A/D converter            │  │
│  └───────────────────────────────┘  │
└─────────────────────────────────────┘


┌─────────────────────────────────────┐        ┌──────────────────────┐
│        Image data cache             │◄────── │  Digital denoising    │
└─────────────────────────────────────┘        │     processing        │
                   │                            └──────────────────────┘
                   ▼
             Data output
```

**FIG. 1**

```
┌──────────────────────────────────────────────────┐   ⟋ 101
│  Construct and improve a CBD-Net, to obtain a     │
│  medical endoscopic image denoising model         │
└──────────────────────────────────────────────────┘
                        │
                        ▼
┌──────────────────────────────────────────────────┐   ⟋ 102
│  Obtain a noise source based on an imaging        │
│  principle of an endoscope                        │
└──────────────────────────────────────────────────┘
                        │
                        ▼
┌──────────────────────────────────────────────────┐   ⟋ 103
│  Obtain a simulated training set based on the     │
│  medical endoscopic image denoising model; and    │
│  obtain a supplementary real training set based   │
│  on the noise source                              │
└──────────────────────────────────────────────────┘
                        │
                        ▼
┌──────────────────────────────────────────────────┐   ⟋ 104
│  Train the medical endoscopic image denoising     │
│  model by using the simulated training set and    │
│  the supplementary real training set              │
└──────────────────────────────────────────────────┘
                        │
                        ▼
┌──────────────────────────────────────────────────┐   ⟋ 105
│  Denoise a medical endoscopic image by using a    │
│  trained medical endoscopic image denoising model │
└──────────────────────────────────────────────────┘
```

**FIG. 2**

$\mathcal{L}_{rec}$

CNN$_D$ : Non-blind Denoising Subnetwork

256

128

64

CBDNet: Convolutional Blind Denoising Network

$\lambda_{asymm}\mathcal{L}_{asymm} + \lambda_{TV}\mathcal{L}_{TV}$

CNN$_E$ : Noise Estimation Subnetwork

32

$\mathcal{L}_{asymm}$ : Asymmetric loss

$\mathcal{L}_{TV}$ : TV regularizer

$\mathcal{L}_{rec}$ : Reconstruction loss

**FIG. 3**

**FIG. 4**

Original image                          BM3D (σ=25, and it takes 5 min)

Method of the present disclosure (it takes 15 s)      FFDNet (it takes 10 s)

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GUO, SHI et al.** Toward convolutional blind denoising of real photographs. *Proceedings of the IEEE/CVF conference on computer vision and pattern recognition.*, 2019

- **KIM, YOONSIK et al.** Transfer learning from synthetic to real-noise denoising with adaptive instance normalization. *Proceedings of the IEEE/CVF conference on computer vision and pattern recognition.*, 2020